# EUROPÄISCHE PATENTSCHRIFT

(11) **EP 0 743 154 B1**
(45) Veröffentlichungstag und Bekanntmachung des Hinweises auf die Patenterteilung: **15.12.1999**
(21) Anmeldenummer: 95116534.9
(22) Anmeldetag: 20.10.1995
(51) Int. Cl.: B29C 43/30

(54) **Moirierter Bodenbelag und Verfahren zu seiner Herstellung**
Marbled floor covering and process for its production
Revêtement de sol marbré et procédé pour sa fabrication

(30) Priorität: 02.03.1995 DE 19507113
(43) Veröffentlichungstag der Anmeldung: 20.11.1996
(73) Patentinhaber: Firma Carl Freudenberg, 69469 Weinheim (DE)
(72) Erfinder: Graab, Gerhard, Dr., D-68199 Mannheim (DE); Nahe, Torsten, D-67134 Birkenheide (DE); Heckel, Klaus, Dr., D-69517 Gorxheimertal (DE); Butscher, Alfons, D-69488 Birkenau (DE)

(56) Entgegenhaltungen:
- EP-A- 0 582 770
- DE-A- 1 479 873
- DE-C- 4 114 575
- GB-A- 777 748
- US-A- 2 083 201

## Beschreibung

Die Erfindung betrifft einen moirierten Bodenbelag nach dem Oberbegriff des Anspruchs 1 und ein Verfahren zu dessen Herstellung

Ein Bodenbelag dieser Art ist beispielsweise aus Deutsches Institut für Gütesicherung und Kennzeichnung, RAL-RG 725/1, Ausgabe November 1983, "Oberseite elastischer Bodenbeläge", Seiten 7-19 und ein Verfahren dieser Art ist beispielsweise aus der DE-C-4 114 575 bekannt.

DE-A-1 479 873 beschreibt ein Verfahren und eine Vorrichtung zur Herstellung von farblich, vorzugsweise streifenartig gemusterten Bahnen oder Platten aus kaltplastischen Kunstoffen, insbesondere Polyvinylchlorid und/oder dessen Mischpolymerisaten. Unterbrochenes Plastigelgut, wie beispielsweise Stränge, wird flächig in gleichmäßiger Schichtdicke ausgebreitet und dann kalt verdichtet. Daran schließt sich das bekannte Gelieren bzw. Kondensieren bzw. Polymerisieren der Ware, drucklos oder mit Hilfe drückender Mittel, an, wodurch die Bahn verfestigt wird. Es lassen sich so zahlreiche Musterungen in Kunststoffbahnen herstellen.

US-A-2 083 201 beschreibt ein Verfahren zur Herstellung eines in sich gemusterten Gummigranulats für Boden- Wand- und Deckenbeläge: In eine Form werden zahlreiche verschiedenartige, im wesentlichen in Prismenform vorliegende Granulatteilchen aus unvulkanisiertem Gummi lose eingebracht, ein statischer Druck ausgeübt, welcher die Granulatteilchen zum Aneinanderhaften veranlaßt, wobei diese leicht deformiert werden und ohne Zwischenräume zueinander positioniert sind. Anschließend wird die entstandene Bahn einer Vulkanisation unterzogen. Gemäß den Figuren 3 und 6 in dieser Patentschrift entstehen Oberflächenmuster, welche denjenigen eines polierten Steingranulat-Fußbodens mit scharf voneinander abgegrenzten Teilflächen entsprechen.

Insbesondere in Sporthallen werden vorwiegend PVC- oder Linoleum-Bodenbeläge eingesetzt, welche eine "moirierte" Struktur aufweisen. Der Begriff "moiriert" beschreibt eine Musterung und ist eine Bezeichnung nach RAL-RG 725/1 (Version 1983).

Nachteilig sind diese Bodenbelagsmaterialien bezüglich ihrer Zigarettenglutbeständigkeit. Die diesbezügliche DIN 51961 wird von PVC nicht, von Linoleum nur teilweise erfüllt; letzteres Material läßt Brandflecken zu, deren Teerbestandteile sehr schlecht oder nicht mehr zu entfernen sind.

Insbesondere bei Sportböden ist darauf zu achten, daß die Forderung der DIN 18032 nach einem Mindestreflexionsgrad von 0,2 erfüllt ist. Die Musterung solcher Bodenbeläge soll außerdem in ihrem Kontrast nicht derart dominieren, daß harte farbliche Kontraste die Spielfeldmarkierungen nicht mehr genügend optisch hervortreten lassen.

Die letzten beiden Forderungen werden von moirierten Bodenbelägen besonders gut erfüllt; ferner treten Schleifspuren von Sportschuh-Sohlen weniger deutlich hervor.

Es ist bisher nicht gelungen, moirierte Bodenbeläge, insbesondere mit dem geforderten Lichtreflexionsgrad und einer besseren Zigarettenglutbeständigkeit, aus Gummi herzustellen. Dies ist deshalb wünschenswert, weil dieses Material kostengünstiger in der Pflege ist und einer intensiven Nutzungsbelastung, wie sie in Sporthallen auftritt, am besten standhält.

DE-C1-41 14 575 offenbart ein Verfahren zur kontinuierlichen Herstellung eines richtungsfrei gemusterten Fußbodenbelags aus vulkanisierbarem, elastomerem Material mit den folgenden Verfahrensschritten:
- Man beschickt einen Schnecken-Kurzextruder mit einem Längen-/Durchmesserverhältnis von 4:1 bis 10:1 bei einer Arbeitstemperatur von 60 bis 100°C kontinuierlich mit zwei oder drei verschiedenfarbigen Streifen aus vulkanisierbarem Elastomermaterial;
- man fördert das Elastomermaterial in einer Menge von 400 bis 600 kg/h ohne farbliche Durchmischung in den Strängen durch den Extruder;
- man trägt das Elastomermaterial in Form von 200 bis 600 Strängen mit Durchmessern von jeweils 2 bis 10 mm durch eine Lochscheibe aus;
- man schlägt die aus der Lochscheibe austretenden Stränge zu Formstücken von jeweils 1 bis 2 mm ab;
- man läßt die abgeschlagenen Formstücke direkt in den Spalt eines Zweiwalzenkalanders fallen, dessen Walzen ein Durchmesser-/Längen-Verhältnis von 1:3,5 und eine Oberflächentemperatur von 60 bis 100°C aufweisen, und verdichtet sie unter Wärme- und Druckeinwirkung zu einer homogenen Materialbahn;
- man führt die den Kalander verlassende, verdichtete Materialbahn direkt einer kontinuierlich arbeitenden Vulkanisationsanlage zu, worin man bei 160 bis 180°C die Endvulkanisation zur fertigen Belagsbahn durchführt.

Der so hergestellte Fußbodenbelag besitzt nicht nur eine völlig richtungsfreie Musterung auf der Oberfläche, er weist auch keinerlei Lufteinschlüsse in der Materialbahn auf. Weitere Verfahrensschritte zur Erzeugung der Musterung, wie zum Beispiel das Abnehmen oberflächennaher Schichten, sind nicht notwendig.

Die vorliegende Erfindung hat zur Aufgabe, einen Bodenbelag anzugeben, welcher aus einem pflegeleichteren und robusteren Material als PVC oder Linoleum besteht. Er soll, um als Sporthallenbelag Verwendung finden zu können, einen Mindestreflexionsgrad von 0,2 nach DIN 18032 aufweisen, und seine Musterung soll über den gesamten Querschnitt sowie auf der Oberfläche der Belagsbahn eine Vorzugsrichtung erkennen lassen. Die Musterung selbst soll jedoch in ihrem Kontrast und ihren Umrissen nicht so sehr dominieren, daß eventuelle Spielfeldmarkierungen nicht mehr genügend optisch hervortreten. Die Musterung soll nach RAL-HG 725/1 (Version November 1983) als "moiriert" bezeichnet werden können.

Die Lösung dieser Aufgabe besteht in einem aus zwei oder drei Grundfarben aufgebauten, moirierten Bodenbelag gemäß Patentanspruch 1 aus Gummi.

Ferner wird ein Verfahren gemäß Patentanspruch 2 zur Herstellung eines solchen Bodenbelags angegeben.

Gemäß der vorstehenden Definition sind moirierte, insbesondere über den gesamten Querschnitt moirierte, Bodenbeläge aus Gummi bisher der Anmelderin nicht bekannt geworden. Im Gegensatz zu PVC und Linoleum ist es verfahrenstechnisch bei der Verarbeitung vulkanisierbarer Elastomermaterialien schwierig, eine solche farbliche Oberflächengestaltung ohne großen Aufwand zu erzeugen. Es entstehen zu harte farbliche gerichtete Kontraste innerhalb der Musterung, und/oder die Oberseiten weisen großflächige, unterschiedlich stark gemusterte, nebeneinanderliegende Bereiche auf, welche sich stark voneinander unterscheidende Reflexionsgrade und im Gesamteindruck somit Zonen aufweisen, deren Mindestreflexionsgrad unter 0,2 liegt, das heißt, störend dunkelfleckig erscheint.

Es wurde nun gefunden, daß man durch Variation eines Verfahrens aus DE-C1-41 14 575, welches eigentlich zur kontinuierlichen Herstellung eines richtungsfrei gemusterten Bodenbelags bestimmt ist, auch im Sinne einer Moirierung gerichtet gemusterte Bodenbeläge herstellen kann, wobei die Musterung über den ganzen Querschnitt vorliegt. Das Verfahren kann kontinuierlich durchgeführt werden und ist somit sehr kostengünstig. Die Vorteile des Materials Gummi bezüglich Reinigung und mechanischer Belastbarkeit können ohne zusätzliche schützende Deckschichten ausgenutzt werden.

Das erfindungsgemäße Verfahren variiert dasjenige aus DE-C1-41 14 575 dahingehend, daß man zwei oder drei verschiedenfarbige Streife aus vulkanisierbarem Elastomermaterial verwendet, wobei man dessen Materialdurchsatz innerhalb des Verfahrens auf 700 bis 1300 kg/h erhöht und wobei man die Formstücke, welche man von den aus der Lochscheibe austretenden Strängen zu jeweils 1 bis 2 mm abschlägt, nicht direkt in den Spalt des Zweiwalzenkalanders fallen, sondern vielmehr vor Eintritt in den Kalander eine auf Raumtemperatur befindliche Abkühlstrecke von 4 bis 6 m durchlaufen läßt. Die Abkühlstrecke besteht aus einer normalen Fördervorrichtung, zum Beispiel einem hitzeresistenten Gummiband, dessen Geschwindigkeit dem erwünschten Materialdurchsatz angepaßt wird.

Es war nicht zu erwarten, daß diese wenigen, technologisch einfachen und kostengünstigen Maßnahmen der Variation eines kontinuierlichen Verfahrens ausreichen würden, um der gestellten Aufgabe in allen Punkten zu genügen. Dessen Kontinuierlichkeit bleibt voll gewahrt, der erhöhte Materialdurchsatz senkt die Produktionskosten weiter, und die Abkühlstrecke ist auf vorhandenen Anlagen zur Herstellung richtungsfreier Fußbodenbeläge aus Gummi leicht zwischenzuschalten.

Die Richtungsfreiheit wird derart aufgehoben, daß ein definiertes, gerichtetes, moiriertes Muster entsteht, welches sich auf der Oberfläche und dem Querschnitt der Belagsbahn befindet. Durch einfache Wahl des Idealdurchsatzes innerhalb der vorgegebenen Grenzen und über die Farbauswahl der verwendeten, vulkanisierbaren Elastomermaterial-Streifen kann mühelos durch wenige Vorversuche das jeweils gewünschte ästhetische Erscheinungsbild erzielt werden, wobei auch der Lichtreflexionsgrad bedarfsgerecht eingestellt werden kann. Die entstehende Oberfläche weist keine mehr als kleinfingergroßen Flächenbereiche mehr auf, welche als Hell- bzw. Dunkelzonen interpretiert werden könnten. Schon bei einer Betrachtung aus mehr als zwei Metern erscheint die Musterung zwar leicht gerichtet, jedoch als Ganzes homogen. Damit ist ausgeschlossen, daß unfreiwillig während der Herstellung Aneinanderreihungen heller oder dunkler Flächen entstehen, welche eventuell Spiel feldmarkierungen störende, eigenständige Linieneindrücke beim Betrachter erzeugen könnten.

Mit der Erfindung ist es erstmals möglich, einen moirierten Fußbodenbelag, welcher sich insbesondere auch für Sportstätten wegen seiner zwar gerichteten, jedoch nicht auffälligen Musterung eignet, zur Verfügung zu stellen, der ohne jegliche schützende Beschichtung auskommt, aus Gummi mit all dessen Vorteilen aufgebaut und in einem kontinuierlichen, sehr rasch und damit kostengünstig ablaufenden, bekannten und bewährten Verfahren herstellbar ist.

## Patentansprüche

1. Aus zwei oder drei Grundfarben aufgebauter, moirierter Bodenbelag, insbesondere für Sporthallen, dadurch gekennzeichnet, daß er aus Gummi besteht.

2. Verfahren zu kontinuierlichen Herstellung eines moirierten Fußbodenbelags mit den Merkmalen des Anspruchs 1 unter Anwendung der Verfahrensschritte:
- Man beschickt einen Schnecken-Kurzextruder mit einem Längen-/Durchmesser-Verhältnis von 4:1 bis 10:1 bei einer Arbeitstemperatur von 60 bis 100°C kontinuierlich mit zwei oder drei verschiedenfarbigen Streifen aus vulkanisierbarem Elastomermaterial;
- man fördert das Elastomermaterial ohne farbliche Durchmischung in den Strängen durch den Extruder;
- man trägt das Elastomermaterial in Form von 200 bis 600 Strängen mit Durchmessern von jeweils 2 bis 10 mm durch eine Lochscheibe aus;
- man schlägt die aus der Lochscheibe austretenden Stränge zu Formstücken von jeweils 1 bis 2 mm ab;
- man läßt die abgeschlagenen Formstücke in den Spalt eines Zweiwalzenkalanders fallen, dessen Walzen ein Durchmesser-/Längen-Verhältnis von 1:3,5 und eine Oberflächentemperatur von 60 bis 100°C aufweisen, und verdichtet sie unter Wärme- und Druckeinwirkung zu einer homogenen Materialbahn;
- man führt die den Kalander verlassende, verdichtete Materialbahn direkt einer kontinuierlich arbeitenden Vulkanisationsanlage zu, worin man bei 160 bis 180°C die Endvulkanisation zur fertigen Belagsbahn durchführt, wobei
man einen Durchsatz von 700 bis 1300 kg/h wählt und man die abgeschlagenen Formstücke vor deren Eintritt in den Spalt des Zweiwalzenkalanders eine auf Raumtemperatur befindliche Abkühlstrecke von 4 bis 6 m durchlaufen läßt, welche als Fördervorrichtung ausgestaltet ist, deren Geschwindigkeit man dem erwünschten Material durchsatz anpaßt.

## Claims

1. A moiréd floor covering, made up of two or three basic colours, in particular for sports halls, characterized in that it is made of rubber.

2. A process for the continuous manufacture of a moiréd floor covering having the features of claim 1, by applying the process steps:
- a short-screw extruder with a length/diameter ratio of 4:1 to 10:1 is continuously charged at an operating temperature of 60 to 100°C with two or three differently coloured strips of vulcanizable elastomeric material;
- the elastomeric material is fed through the extruder without any mixing of the colours in the strands;
- the elastomeric material is brought out through a breaker plate in the form of 200 to 600 strands with diameters of in each case 2 to 10 mm;
- the strands emerging from the breaker plate are chopped off to give moulded pieces of in each case 1 to 2 mm;
- the chopped-off moulded pieces are dropped into the nip of a two-roll calender, the rolls of which have a diameter/length ratio of 1:3.5 and a surface temperature of 60 to 100°C, and are compressed under the effect of heat and pressure to form a homogeneous material web;
- the compressed material web leaving the calender is fed directly to a continuously operating vulcanization installation, in which the final vulcanization to form the finished covering web is carried out at 160 to 180°C,
a throughput of 700 to 1300 kg/h being chosen and the chopped-off moulded pieces being made to run through a cooling zone of 4 to 6 m at room temperature before their entry into the nip of the two-roll calender, which cooling zone is in the form of a conveying means, the speed of which is adapted to the desired material throughput.

## Revendications

1. Revêtement de sol moiré, confectionné à partir de deux ou trois couches de fond notamment pour salles de sport, caractérisé en ce qu'il est constitué de caoutchouc.

2. Procédé pour la fabrication continue d'un revêtement de sol moiré présentant les caractéristiques de la revendication 1, en respectant les étapes du procédé :
- on recouvre l'extrudeuse courte à vis d'un rapport longueur-diamètre de 4 :1 à 10 :1 à une température de travail de 60 à 100°C, en continu avec deux ou trois bandes de diverses couleurs en élastomère vulcanisable ;
- on transporte par I'extrudeuse l'élastomère en fils, sans mélange des couleurs ;
- on décharge par un disque perforé l'élastomère sous forme de 200 à 600 fils présentant un diamètre de 2 à 10 mm ;
- on dépointe les fils sortant du disque ajouré en objets moulés de 1 à 2 mm chacun ;
- on laisse tomber les objets moulés dépointés dans la fente d'une calandre à deux rouleaux, dont les rouleaux présentent un rapport diamètre-longueur de 1 :3,5 et une température de surface de 60 à 100°C, et on les comprime sous l'influence de la chaleur et de la pression pour obtenir une nappe de tissus homogène ;
- on dirige directement la nappe de tissus comprimée qui quitte la calandre vers une installation de vulcanisation travaillant en continu, dans laquelle on effectue une vulcanisation finale à 160 à 180°C pour obtenir une nappe en caoutchouc achevée,
dans lequel on choisit un débit de 700 à 1300 kg/h et qu'avant leur entrée dans la fente de la calandre à deux rouleaux, les objets moulés dépointés doivent traverser une section de refroidissement de 4 à 6 mètres se trouvant à température ambiante, qui est formée à titre de dispositif de transport dont on adapte la vitesse au débit souhaité.
